# EUROPÄISCHE PATENTSCHRIFT

(11) **EP 4 105 055 B1**
(45) Veröffentlichungstag und Bekanntmachung des Hinweises auf die Patenterteilung: **27.09.2023**
(21) Anmeldenummer: 22173798.4
(22) Anmeldetag: 17.05.2022
(51) Int. Cl.: B60K 37/02, F21V 8/00

(54) **FUNKTIONSANZEIGE ZUR SELEKTIVEN ANZEIGE MEHRERER JEWEILS EINE SCHALTFUNKTION UND/ODER MEHRERE SCHALTZUSTÄNDE REPRÄSENTIERENDER SYMBOLE MIT AUSRICHTFUNKTION DER LICHTQUELLEN SOWIE ZUGEHÖRIGES MONTAGEVERFAHREN**
FUNCTION DISPLAY FOR SELECTIVELY DISPLAYING A PLURALITY OF SYMBOLS REPRESENTING A SWITCHING FUNCTION AND / OR A PLURALITY OF SWITCHING STATES WITH ALIGNMENT FUNCTION OF THE LIGHT SOURCES AND CORRESPONDING METHOD OF ASSEMBLY
AFFICHAGE FONCTIONNEL DESTINÉ À L'AFFICHAGE SÉLECTIF DE PLUSIEURS SYMBOLES REPRÉSENTANT RESPECTIVEMENT UNE FONCTION DE COMMUTATION ET/OU PLUSIEURS ÉTATS DE COMMUTATION À FONCTION D'ALIGNEMENT DES SOURCES LUMINEUSES, AINSI QUE PROCÉDÉ DE MONTAGE CORRESPONDANT

(30) Priorität: 18.06.2021 DE 102021115868
(43) Veröffentlichungstag der Anmeldung: 21.12.2022
(73) Patentinhaber: Preh GmbH, 97616 Bad Neustadt a.d. Saale (DE)
(72) Erfinder: SCHUSTEK, Wolfgang, 97618 Eichenhausen (DE); BENKERT, Michael, 97633 Saal an der Saale (DE)
(74) Vertreter: Lohmanns, Bernard

(56) Entgegenhaltungen:
- EP-A1- 2 009 615
- WO-A1-2005/022491
- DE-A1- 2 536 700
- US-A1- 2008 247 152
- US-A1- 2010 124 074

## Beschreibung

Die Erfindung betrifft eine Funktionsanzeige zur selektiven Anzeige mehrerer, jeweils eine Schaltfunktion und/oder mehrere Schaltzustände repräsentierender Symbole sowie ein zugehöriges Montageverfahren. Diese Funktionsanzeigen werden beispielsweise bei einem multifunktionalen Bedienelement zur Visualisierung der mit dem Bedienelement verbundenen Schaltfunktionalitäten und/oder Schaltzuständen benötigt. Dazu werden regelmäßig elektronische Pixelmatrixanzeigen verwendet. Diese sind jedoch vergleichsweise teuer, schränken aufgrund ihrer meist rechteckigen Form die gestalterische Auslegung und Platzierung ein. Darüber hinaus neigen elektronische Pixelmatrixanzeigen bei der Darstellung statischer Anzeigeinhalte oft zu einem "Einbrennen", d.h. der Anzeigeinhalt bleibt auch bei ausgeschalteter Anzeige durch optisch wahrnehmbare Schädigungen der bildgebenden Schichten der Anzeige dauerhaft und unerwünscht sichtbar. Darüber hinaus ist der Stromverbrauch derartiger elektronischer Pixelmatrixanzeigen vergleichsweise hoch. Bei gewissen Anwendungen verbietet sich zudem aufgrund der Verletzungsgefahr beispielsweise bei einem Kopfaufprall die Verwendung üblicher elektronischer Pixelmatrixanzeigen. Als Alternative zu Pixelmatrixanzeigen ist es bekannt, das in eine Stirnfläche eines flächige Lichtleiters eingekoppelte Licht einer Lichtquelle mittels Oberflächenstrukturen an einer als Anzeigefläche dienenden Hauptfläche gezielt auszukoppeln, wobei der mit Oberflächenstrukturen versehene Bereich lediglich bereichsweise vorgesehen ist und ein Symbol oder dergleichen wiedergibt. Um somit unabhängig verschiedene Symbole zur Anzeige bringen zu können, werden mehrere dieser Lichtleiter stapelförmig, einander überlagernd angeordnet, wobei um Bauraum einzusparen die flächigen Lichtleiter vergleichsweise dünn ausgestaltet und beispielsweise als Kunststofffolien ausgebildet sind. Dadurch stellt die präzise Ausrichtung der regelmäßig als Lichtquellen verwendeten Leuchtdioden, genauer deren Abstrahlcharakteristik relativ zu den Stirnflächen, ein Problem dar, insbesondere wenn die Lichtquellen aus Gründen der Effizienz nicht einzeln an jedem Lichtleiter montiert werden kann, sondern diese gemeinsam auf einer Leiterplatte angeordnet sind. Ein Versatz nur einer Lichtquelle kann somit zu einer geringen Leuchtkraft des zugehörigen Symbols oder gar zum Totalausfall führen. Aus US 2010/124074 A1, welches dem Anspruch 1 am nächsten kommt, ist ein über die Kanten beleuchtetes Schild mit einem Muster auf der Oberfläche der Tafel, dessen Muster je nach Abstand von der beleuchteten Kante der Tafel variiert, um das Licht gleichmäßig von der Tafel abzugeben bekannt.

Vor diesem Hintergrund ist es die Aufgabe der vorliegenden Erfindung, eine Funktionsanzeige bereitzustellen, die eine Möglichkeit schafft, eine zuverlässige, präzise und dabei reproduzierbare optische Kopplung zwischen den zur Funktionsanzeige gehörigen Lichtquellen und den ebenfalls zur Funktionsanzeige gehörigen mehreren Lichtleitern zu gewährleisten, wobei diese darüber hinaus preiswert herzustellen ist, energiesparend und zuverlässig ist und/oder das Verletzungsrisiko insbesondere bei einem Kopfaufschlag verringert. Diese Aufgabe wird durch eine Funktionsanzeige des Anspruchs 1 gelöst. Ein entsprechend vorteilhaftes Montageverfahren ist Gegenstand des nebengeordneten Anspruchs. Vorteilhafte Ausgestaltungen sind Gegenstand der jeweils abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Funktionsanzeige zur selektiven Anzeige von mehreren, jeweils eine Schaltfunktion und/oder mindestens zwei Schaltzustände repräsentierenden Symbole, insbesondere für ein Kraftfahrzeug, Als selektive Anzeige wird nicht nur die wahlweise Anzeige unterschiedlicher Symbole aus einer Anzahl von vorgegebenen Symbolen verstanden, was bei der vorliegenden Lösung durch selektive Auswahl und elektrische Bestromung einer oder mehrerer Lichtquellen aus einer Vielzahl von Lichtquellen erreicht wird, sondern auch das Einschalten und Ausschalten einer Lichtquelle, um selektiv ein Symbol durch die aktivierte Hinterleuchtung optisch für den Betrachter in Erscheinung zu bringen bzw. durch das Abschalten der Hinterleuchtung das Symbol für den Betrachter möglichst nahezu verschwinden zu lassen.

Die erfindungsgemäße Funktionsanzeige weist einen Lichtleiterstapel auf, der bei bestimmungsgemäßer Anbringung der Funktionsanzeige eine einem Betrachter zugewandte Anzeigefläche ausbildet. Der Lichtleiterstapel ist aus mindestens zwei, in einer Stapelrichtung überlagert angeordneten, transparenten oder transluzenten, flächigen Lichtleitern ausgebildet, die durch eine transparente oder transluzente Schicht aus einem im Vergleich zu den angrenzenden Lichtleitern optisch dünneren Material, bevorzugt über einen Luftspalt, beabstandet angeordnet sind. Dabei weisen die Lichtleiter jeweils eine einem Betrachter zugewandte Hauptfläche und eine dem Betrachter abgewandte Hauptfläche auf. Bei mindestens einem Lichtleiter ist die dem Betrachter abgewandte Hauptfläche einem entgegen der Stapelrichtung nächstbenachbarten Lichtleiter zugewandt. Der zwischen den Lichtleitern durch die Schicht bzw. den Luftspalt eingestellte Abstand liegt beispielsweise im Bereich von 1 mm bis 3 mm, zumindest in dem überwiegenden Bereich der Lichtleiter.

Die erfindungsgemäße Funktionsanzeige kann optional eine äußere, zwischen dem Lichtleiterstapel und dem Betrachter angeordnete, transparente oder transluzente Deckschicht aufweisen, durch welche bei bestimmungsgemäßer Anordnung der Funktionsanzeige die vom Lichtleiterstapel definierte Anzeigefläche für den Betrachter sichtbar ist. Beispielsweise ist das Material oder die Materialien der Deckschicht und der Lichtleiter ein Kunststoff, bevorzugt ein Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder ein Glaswerkstoff.

Erfindungsgemäß ist pro Lichtleiter mindestens eine Lichtquelle vorgesehen, die angeordnet ist, Licht über eine Stirnfläche des zugehörigen Lichtleiters in den jeweiligen Lichtleiter einzukoppeln. Die Lichtleiter weisen beispielsweise zwei gegenüberliegende, bevorzugt parallel zueinander verlaufende Hauptflächen auf, die über Stirnflächen, die mit den Hauptflächen des Lichtleiters gemeinsame Kanten ausbilden, beispielsweise an den Schmalseiten und an den Längsseiten des Lichtleiters, verbunden sind. Beispielsweise sind die Stirnflächen orthogonal zu wenigstens einer Hauptfläche oder beiden Hauptflächen des Lichtleiters.

Bei der Lichtquelle handelt es sich beispielsweise um eine Leuchtdiode, bevorzugt um eine solche in SMD-Bauweise. Zur Verbesserung der Lichteinkopplung und/oder zur Anpassung der Lichtabstrahlungscharakteristik der Lichtquelle an die für den Lichteintritt in den Lichtleiter bestimmte Stirnfläche ist bevorzugt zwischen dem Lichtleiter und der Lichtquelle jeweils eine Linse angeordnet.

Erfindungsgemäß ist ferner pro Lichtleiter ein im oder auf dem Lichtleiter vorgesehener, mikrostrukturierter Symbolbereich vorgesehen, welche mehrere lichtbrechende und/oder lichtstreuende Mikrostrukturen umfasst. Der mikrostrukturierte Symbolbereich bildet in Alleinwirkung oder zusammen mit anderen mikrostrukturierten Symbolbereichen desselben Lichtleiters oder eines anderen Lichtleiters ein Symbol aus, welches bei aktivierter Lichtquelle für den Betrachter mittels des in den oder die jeweiligen Lichtleiter eingekoppelten Lichtes leuchtend sichtbar wird, aufgrund einer durch die mehreren Mikrostrukturen an der jeweiligen Mikrostrukturoberfläche bewirkten Lichtbrechung und/oder Lichtstreuung. Beispielsweise wird durch die Mikrostruktur ein Einfallswinkel des Lichtes auf die zugehörige Hauptfläche erreicht, der nicht die Totalreflexionsbedingung der Hauptfläche des Lichtleiters als Grenzfläche erfüllt, so dass das in den Lichtleiter eingekoppelte Licht den Lichtleiter wieder verlässt.

Erfindungsgemäß ist eine Leiterplatte vorgesehen, auf der die mehreren Lichtquellen angeordnet und festgelegt ist. Bevorzugt erfolgt diese Festlegung durch Verlöten mit einer metallischen Kontaktfläche der Leiterplatte. Erfindungsgemäß ist ferner eine stoffschlüssig und/oder kraftschlüssig und/oder formschlüssig an dem Lichtleiterstapel festgelegte Blende vorgesehen. Diese Blende, die erfindungsgemäß eine Montagefläche ausbildet, an der anliegend die Leiterplatte festgelegt ist, ist bevorzugt aus einem opaken Material ausgebildet. Erfindungsgemäß weist die Blende mehrere beidseitig offene, jeweils mindestens eine der Lichtquellen der Leiterplatte aufnehmende Lichtschächte auf, so dass mindestens eine Lichtquelle einer Stirnfläche gegenüberliegt, um Licht in die jeweilig zugehörige Stirnfläche einzukoppeln, bevorzugt um möglichst so den ausschließlichen Lichtübertritt von der Lichtquelle zu dem zugehörigen Lichtleiter sicher zu stellen, der aufgrund der gegenüberliegenden Anordnung seiner Stirnfläche der betreffenden Lichtquelle zugeordnet ist. Folglich sind die Lichtschächte bevorzugt so ausgebildet, dass ein unerwünschter Lichtübertritt zum Betrachter, zu weiteren Schichten oder Lichtleitern neben dem zugeordneten Lichtleiter unterbunden wird.

Erfindungsgemäß ist das in Stapelrichtung vorliegende erste Spiel zweier quer zur Stapelrichtung beabstandet angeordneter Lichtschächte zur zugehörigen, im betreffenden Lichtschacht aufgenommenen Lichtquelle kleiner, als jedes in Stapelrichtung vorliegende zweite Spiel der verbleibenden Lichtschächte zur zugehörigen im betreffenden Lichtschacht aufgenommenen Lichtquelle. Beispielsweise beträgt das erste Spiel 0,05 bis 0,20 mm, während das zweite Spiel 0,5 mm bis 5 mm beträgt. Als erstes bzw. zweites Spiel wird der lichte Gesamtabstand zwischen der Lichtquelle und dem Lichtschacht in Stapelrichtung verstanden, auf den die Beweglichkeit der betreffenden Lichtquelle in dem ihm zugehörigen Lichtschacht in Stapelrichtung beschränkt ist. Somit dienen zwei, quer zur Stapelrichtung beabstandet angeordnete Lichtquellen im Zusammenwirken mit dem ihm jeweils zugeordneten Lichtschacht der mechanischen Ausrichtung zwischen der Blende und der Leiterplatte, während die verbleibenden Lichtquellen aufgrund des größeren Spiels davon unbeeinträchtigt sind. Bei den vorbekannten Lösungen wurde aufgrund der Gefahr einer Beschädigung der Lichtquellen oder deren elektrische Kontaktierung, wie Verlust des Lötkontakts oder Ablösen der Kontaktfläche der Leiterplatte durch Scherkräfte, insbesondere bei Auslegung der Lichtquelle als Leuchtdioden in SMD-Bauweise, auf eine solche mechanische Einwirkung generell verzichtet, mit dem Nachteil, dass eine Fehljustierung der Lichtquellen in Kauf genommen werden musste. Die Gefahr der Beschädigung allenfalls zweier Lichtquellen in Kauf nehmend, nutzt die vorliegende Ausführungsform diese als mechanische Positionierhilfe oder Ausrichthilfe für die Verbindung zwischen Leiterplatte und Blende, mit dem Vorteil, dass nunmehr eine ausreichende präzise Ausrichtung aller Lichtquellen zu den zugehörigen Stirnflächen und damit eine optimale Ausleuchtung des zugehörigen Lichtleiters gewährleistet ist, da insbesondere die Positionierung der Lichtquellen auf der Leiterplatte mit einer ausreichenden und einer ungleich höheren Positioniergenauigkeit erfolgen kann, wie dies beispielsweise bei Bestückungsautomaten in der SMD-Bestückung der Fall ist.

Um beispielsweise die mechanische Verbindung zur Leiterplatte der zwei zur mechanischen Ausrichtung vorgesehenen Lichtquellen, nachfolgend als Ausrichtlichtquellen bezeichnet, zu stärken, können beispielsweise diverse Maßnahmen ergriffen werden, beispielsweise eine vergrößerte Kontaktfläche auf der Leiterplatte, ein mechanisch höher beanspruchbares Lötmittel, eine andere Ausrichtung der Ausrichtlichtquelle, beispielsweise im Vergleich zu den verbleibenden Lichtquellen der Leiterplatte. In einer anderen Ausgestaltung kann dem zur Ausrichtlichtquelle gehörigen Lichtleiter eine weitere Lichtquelle als redundante Lichtquelle zugeordnet sein, die nicht als Ausrichtlichtquelle fungiert.

Bevorzugt sind die zwei Ausrichtlichtquellen ein und demselben Lichtleiter zugeordnet, um eine präzise Ausrichtung bezüglich des betreffenden Lichtleiters und damit dessen gleichmäßige Ausleuchtung zu gewährleisten, weil mit diesem beispielsweise ein bei der Verwendung der Funktionsanzeige funktionswesentliches Symbol zur optischen Anzeige gelangt, wie ein beim Fahrbetrieb wesentliches Warnsymbol bei einer kraftfahrzeugtechnischen Verwendung der Funktionsanzeige.

Der mikrostrukturierte Symbolbereich kann durch Laserablation in den Lichtleiter eingebracht werden, beispielsweise dreidimensional durch Vitrographie, auch als Laserinnengravur bezeichnet, oder auf einer dessen Hauptflächen aufgebracht werden. Bevorzugt ist der mikrostrukturierte Symbolbereich durch Prägen einer der Hauptflächen pro Lichtleiter ausgebildet, wodurch die Funktionsanzeige kostengünstig zu realisieren ist.

Bevorzugt wird der mikrostrukturierte Symbolbereich aus mehreren, gleichförmig ausgebildeten Mikrostrukturen ausgebildet, die jeweils zusammen einen zusammenhängenden mikrostrukturierten Symbolbereich für jeden Lichtleiter definieren. Als Mikrostruktur wird bevorzugt eine singuläre Erhebung auf der Hauptfläche oder eine singuläre Vertiefung in der Hauptfläche verstanden. Um die Sichtbarkeit mit dem blanken Auge weitgehend auszuschließen, liegt dabei eine Maximalabmessung jeder Mikrostruktur beispielsweise im Bereich 1 bis 50 µm, bevorzugt im Bereich 1 µm bis 25 µm. Bevorzugt sind die Mikrostrukturen gleichmäßig beabstandet über den gesamten mikrostrukturierten Symbolbereich Hauptfläche verteilt angeordnet. Beispielsweise sind die Mikrostrukturen pyramidenförmig oder prismatisch ausgeformt. Bevorzugt sind die Mikrostrukturen nicht nur gleichförmig, d.h. übereinstimmend ausgeformt, sondern weisen eine übereinstimmende Ausrichtung innerhalb des jeweiligen mikrostrukturierten Symbolbereichs auf. Eine übereinstimmende Ausrichtung ergibt sich beispielsweise bei einer ebenen Hauptfläche dann, wenn jede Mikrostruktur durch gedachte, ausschließlich translatorische Verschiebung auf eine benachbarte Mikrostruktur desselben mikrostrukturierten Symbolbereichs abgebildet werden kann. Noch bevorzugter sind die Mikrostrukturen so ausgebildet, dass sie ein aus dem Lichtleiter austretendes, kollimiertes Lichtbündel aus dem Licht erzeugen, welches von der Lichtquelle stammt und zuvor über die Stirnfläche in den Lichtleiter eingetreten ist.

Bevorzugt liegt die mittlere Anzahldichte der Mikrostrukturen für jeden mikrostrukturierten Symbolbereich des Lichtleiterstapels im Bereich zwischen 500 bis 7.000 pro mm², noch bevorzugter im Bereich zwischen 1000 bis 4000 pro mm². Dadurch wird einerseits die Nicht-Sichtbarkeit bei ausgeschalteter Lichtquelle gewährleistet, während bei aktivierter Lichtquelle der Eindruck eines scheinbar gleichmäßig ausgeleuchteten Symbolbereichs für das "unbewaffnete" Auge vorgetäuscht werden kann. Bevorzugter ist die mittlere Anzahldichte für jeden Lichtleiter im Wesentlichen gleich gewählt, wobei unter "im Wesentlichen gleich" eine Maximalabweichung zwischen den Anzahldichten der Lichtleiter von unter 100 pro mm² verstanden wird.

Bevorzugt sind alle Lichtleiter außerhalb des mikrostrukturierten Symbolbereichs transparent, so dass ein großer Teil der Funktionsanzeige zumindest teildurchsichtig verbleibt und beispielsweise die Durchsicht durch die Funktionsanzeige gewährleistet ist, um dem Betrachter die Möglichkeit zu geben, durch die Funktionsanzeige hindurch andere Anzeigen, Instrumente oder den Straßenverlauf zu verfolgen. Dadurch ist beispielsweise die Platzierung der Funktionsanzeige an einem Lenkrad, beispielsweise im Bereich zwischen Lenkradnabe und Lenkradkranz möglich, ohne die Sicht auf das Armaturenbrett zu beeinträchtigen. Bevorzugt macht der Flächenanteil aller oberflächenstrukturierten Symbolbereiche an der Anzeigefläche weniger als die Hälfte aus.

Bevorzugt weist mindestens einer der Lichtleiter, bevorzugter alle Lichtleiter des Lichtleiterstapels eine Kunststofffolie, beispielsweise eine thermoplastische Folie, wie eine PC-Folie oder PE-Folie, auf. Der jeweilige Lichtleiter muss nicht zwingend einteilig ausgebildet sein, er kann aus mehreren Komponenten zusammengefügt werden. In einer Ausgestaltung weist mindestens ein Lichtleiter einen mehrlagigen Folienschichtaufbau auf. Beispielswese wird mindestens ein Lichtleiter durch Hinterspritzen einer transparenten Folie, mit einem weiteren transparenten oder transluzenten Material, insbesondere mit einem Thermoplast erzeugt.

Gemäß einer bevorzugten Ausführungsform ist vorgesehen, dass bei der senkrechten Betrachtung auf die Anzeigefläche, insbesondere aus einer Position über dem geometrischen Mittelpunkt der Anzeigefläche, die mikrostrukturierten Symbolbereiche wenigstens zweier Lichtleiter des Lichtleiterstapels für den Betrachter nicht überlappen, bevorzugt beabstandet zueinander angeordnet sind.

Gemäß einer bevorzugten Ausführungsform ist vorgesehen, dass bei der senkrechten Betrachtung auf die Anzeigefläche, insbesondere aus einer Position über dem geometrischen Mittelpunkt der Anzeigefläche, die mikrostrukturierten Symbolbereiche wenigstens zweier Lichtleiter des Lichtleiterstapels für den Betrachter aneinandergrenzen, bevorzugt überlappen, bevorzugter deckungsgleich angeordnet sind.

Zur Bereitstellung zusätzlicher Farbeffekte unterscheiden sich gemäß einer bevorzugten Ausgestaltung wenigstens zwei Lichtquellen in der Lichtfarbe.

Bevorzugt weist die Blende eine der Anzahl der Lichtleiter entsprechende Anzahl von Nuten zur formschlüssigen Aufnahme jeweils desjenigen Endes des Lichtleiters auf, welches die der Lichtquelle zugewandte Stirnfläche ausbildet. Dadurch wird eine zuverlässige Positionierung der Stirnflächen erreicht. Die zwischen den Nuten ausgebildeten, stegförmigen Vorsprünge oder Rippen dienen der optischen Isolierung zwischen den Lichtleitern.

Gemäß einer bevorzugten Ausgestaltung weist zur Festlegung der Leiterplatte an der Blende die Leiterplatte eine Ausnehmung oder einen Durchbruch auf und die Blende einen die Ausnehmung oder den Durchbruch der Leiterplatte durchgreifenden, von der Montagefläche vorstehenden Zapfen auf, dessen freies Ende heißverstemmt ist. Der Zapfen und die Blende sind beispielhaft einstückig aus einem Thermoplast ausgebildet.

Bevorzugt und insbesondere um die Gefahr des wechselseitigen Lichtübersprechens in den benachbarten Lichtleiter zu vermeiden, weisen wenigstens die äußeren Lichtleiter des Lichtleiterstapels jeweils eine Kröpfung an demjenigen Ende auf, welches die der Lichtquelle zugewandte Stirnfläche ausbildet. Bevorzugt ist die Kröpfung ausgebildet, den Abstand zwischen den Lichtleitern gegenüber dem Bereich der Lichtleiter, in dem der mikrostrukturierte Symbolbereich angeordnet ist zu vergrößern, um die Fixierung der Lichtleiter zu verbessern und die wechselseitige optische Isolierung durch die Blende zu verbessern.

Gemäß einer bevorzugten Ausgestaltung ist ein zwischen dem Betrachter und dem Lichtleiterstapel angeordnetes, transparentes Elektrodenarray sowie eine zugehörige Auswertelektronik zur kapazitiven, bevorzugt ortsaufgelöst kapazitiven, Berührdetektion vorgesehen, um beispielsweise durch Berühreingabe die durch die Symbole angezeigten Funktionszustände zu wechseln.

Um Bauraum zu sparen, ist gemäß einer bevorzugten Ausgestaltung vorgesehen, dass eine Leiterplattenoberfläche der Leiterplatte, welche die Lichtquellen trägt, im Wesentlichen parallel zur Stapelrichtung angeordnet ist, welche durch die Lage der Lichtleiter vorgegeben ist.

Bevorzugt weist die Funktionsanzeige ein Gehäuse auf, wobei die Leiterplatte ausschließlich elastisch gegenüber dem Gehäuse abgestützt ist oder nicht unmittelbar am Gehäuse abgestützt ist. Bevorzugter erfolgt die ausschließliche elastische Abstützung im Wesentlichen in einer Richtung, die senkrecht zur Montagefläche ist, um eine mechanische Beschädigung der Lichtquellen zu vermeiden.

Die Erfindung betrifft ferner ein Montageverfahren für eine Funktionsanzeige zur selektiven Anzeige von Schaltfunktionen und/oder Schaltzuständen repräsentierenden Symbolen, insbesondere für ein Kraftfahrzeug, mit den folgenden Schritten. In einem Bereitstellungsschritt erfolgt ein Bereitstellen eines Lichtleiterstapels, der bei bestimmungsgemäßer Anbringung der Funktionsanzeige eine einem Betrachter zugewandte Anzeigefläche ausbildet. Dabei wird der Lichtleiterstapel aus mindestens zwei, in einer Stapelrichtung überlagert angeordneten, transparenten oder transluzenten, flächigen Lichtleitern ausgebildet, die durch eine transparente oder transluzente Schicht aus einem im Vergleich zu den angrenzenden Lichtleitern optisch dünneren Material, bevorzugt über einen Luftspalt, beabstandet angeordnet sind, so dass die Lichtleiter jeweils eine einem Betrachter zugewandte Hauptfläche und eine dem Betrachter abgewandte Hauptfläche aufweisen. Bei mindestens einem Lichtleiter ist die dem Betrachter abgewandte Hauptfläche einem entgegen der Stapelrichtung nächstbenachbarten Lichtleiter zugewandt. Ferner ist pro Lichtleiter wenigstens ein im oder auf dem Lichtleiter vorgesehener, mikrostrukturierter Symbolbereich vorgesehen, der mehrere, lichtbrechende und/oder lichtstreuende Mikrostrukturen umfasst.

In einem weiteren Bereitstellungsschritt wird eine Leiterplatte bereitgestellt, die mehrere Lichtquellen trägt, deren Anzahl mindestens der Anzahl der Lichtleiter entspricht. Bevorzugt sind alle Lichtquellen auf einer der Hauptflächen der Leiterplatte, die als Leitplattenoberfläche bezeichnet wird, angeordnet.

In einem weiteren Bereitstellungsschritt wird eine Blende bereitgestellt, welche eine Montagefläche zur Anlage der Leiterplatte, bevorzugt der Leiterplattenoberfläche, und mehrere beidseitig offene Lichtschächte aufweist, wobei die Lichtschächte zur Aufnahme jeweils mindestens eine der Lichtquellen der Leiterplatte ausgebildet sind, da deren eines Ende bevorzugt in der Montagefläche endet.

Der Bereitstellungsschritt sieht beispielsweise vor, dass die Lichtleiter und die Blende in einem formgebenden Verfahren, insbesondere einem thermisch formgebenden Verfahren, wie einem Spritzgussverfahren, hergestellt werden. Das jeweils angewandte formgebende Verfahren kann beispielsweise das Strukturieren der Hauptflächen der Lichtleiter mit den mehreren Mikrostrukturen, beispielsweise durch Prägen, beinhalten.

In einem nachfolgenden Schritt erfolgt ein Festlegen des Lichtleiterstapels an der Blende durch stoffschlüssiges und/oder kraftschlüssiges und/oder formschlüssiges Verbinden.

In einem Ausrichtschritt erfolgt ein Ausrichten der Leiterplatte, indem die Leitertplatte in Anlage mit der Montagefläche gebracht wird, so dass jeweils mindestens eine Lichtquelle über einen Lichtschacht der Blende einer Stirnfläche eines der Lichtleiter zur Lichteinkopplung gegenüberliegt und die Lichtquellen in einem zugehörigen Lichtschacht aufgenommen sind. Erfindungsgemäß ist vorgesehen, dass das in Stapelrichtung vorliegende erste Spiel zweier quer zur Stapelrichtung beabstandet angeordneter Lichtschächte zur zugehörigen, im betreffenden Lichtschacht aufgenommenen Lichtquelle kleiner ist, als jedes in Stapelrichtung vorliegende zweite Spiel der verbleibenden Lichtschächte zur zugehörigen im betreffenden Lichtschacht aufgenommenen Lichtquelle, so dass dadurch die relative Ausrichtung von Blende und Leiterplatte durch das erste Spiel vorgegeben ist.

In einem nachfolgenden Schritt erfolgt ein Festlegen der ausgerichteten Leiterplatte an der Blende derart, dass jeweils das Licht der Lichtquellen über eine der Lichtquelle zugewandte Stirnfläche eines zugehörigen Lichtleiters in den jeweiligen Lichtleiter eingekoppelt wird und der mikrostrukturierte Symbolbereich bei jeweils aktivierter Lichtquelle für den Betrachter mittels des in den Lichtleiter eingekoppelten Lichtes leuchtend sichtbar wird, um dem Betrachter ein sich aus einem oder mehreren mikrostruktureierten Symbolbereichen zusammensetzendes Symbol anzuzeigen. Als Spiel wird der lichte Gesamtabstand zwischen der Lichtquelle und dem die Lichtquelle aufnehmenden Lichtschacht in Stapelrichtung verstanden, auf den somit die Beweglichkeit der betreffenden Lichtquelle in dem ihm zugehörigen Lichtschacht in Stapelrichtung beschränkt ist. Somit dienen zwei, quer zur Stapelrichtung beabstandet angeordnete Lichtquellen im Zusammenwirken mit dem ihm jeweils zugeordneten Lichtschacht der mechanischen Ausrichtung zwischen der Blende und der Leiterplatte, während die verbleibenden Lichtquellen aufgrund des größeren zweiten Spiels davon unbeeinträchtigt sind. Bei den vorbekannten Lösungen wurde aufgrund der Gefahr einer Beschädigung der Lichtquellen oder deren elektrische Kontaktierung, wie Verlust des Lötkontakts oder Ablösen der Kontaktfläche der Leiterplatte durch Scherkräfte, insbesondere im Falle der Auslegung der Lichtquelle als Leuchtdioden in SMD-Bauweise, auf eine solche mechanische Einwirkung generell verzichtet, mit dem Nachteil, dass eine Fehljustierung der Lichtquellen in Kauf genommen werden musste. Die Gefahr der Beschädigung zweier Lichtquellen in Kauf nehmend, nutzt die vorliegende Ausführungsform diese als mechanische Positionierhilfe für die Verbindung zwischen Leiterplatte und Blende, mit dem Vorteil, dass nunmehr eine ausreichende präzise Ausrichtung aller Lichtquellen zu den zugehörigen Stirnflächen und damit eine optimale Ausleuchtung des zugehörigen Lichtleiters gewährleistet ist.

Gemäß einer bevorzugten Ausgestaltung des erfindungsgemäßen Montageverfahrens ist bei der Festlegung der Leiterplatte an der Blende vorgesehen, dass die Blende einen eine Ausnehmung oder einen Durchbruch der Leiterplatte durchgreifenden Zapfen ausbildet, der mit einem in Stapelrichtung vorliegenden dritten Spiel die Ausnehmung oder den Durchbruch durchgreift, welches mindestens größer als das erste Spiel ist. Dabei umfasst das Festlegen ein abschließendes Heißverstemmen des Zapfens, um die Leiterplatte an der Blende festzulegen.

Gemäß einer bevorzugten Ausgestaltung sind die Lichtquellen in SMD-Bauweise ausgeführte Leuchtdioden und werden in einem dem Bereitstellen der Leiterplatte vorherhegenden Lötschritt mit der Leiterplatte verlötet.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Figur 1: eine schematische Schnittansicht einer ersten Ausführungsform einer erfindungsgemäßen Funktionsanzeige 1;
- Figur 2: eine perspektivische Ansicht einer Blende 6 der ersten Ausführungsform aus Figur 1;
- Figur 3: eine perspektivische Ansicht einer Leiterplatte 7 der ersten Ausführungsform aus Figur 1;
- Figur 4: eine Ausschnittsvergrößerung der Figur 1;
- Figur 5: eine schematische Schnittansicht einer zweiten Ausführungsform der erfindungsgemäßen Funktionsanzeigen 1.

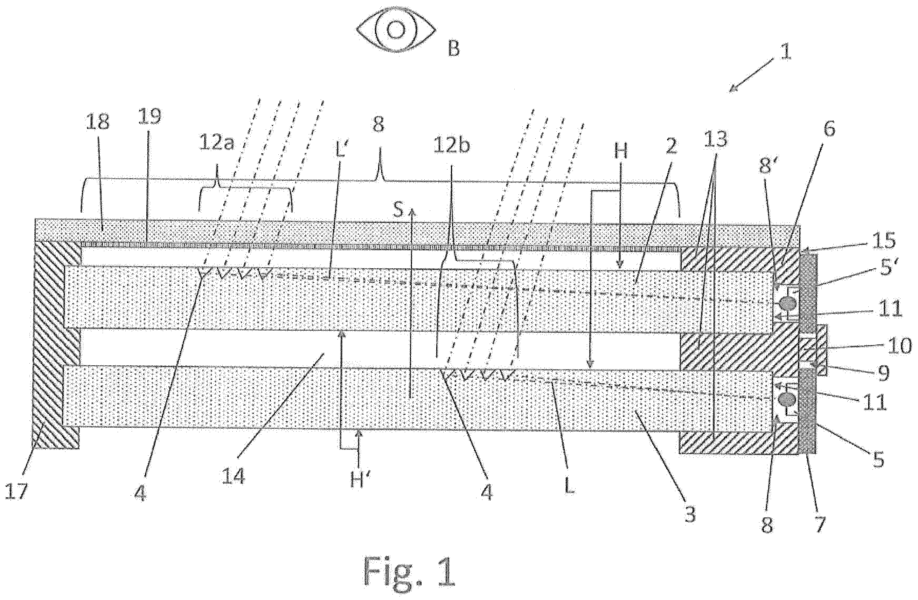

Figur 1 zeigt schematisch eine erste erfindungsgemäße Ausführungsform der Funktionsanzeige 1. Die Funktionsanzeige 1 umfasst eine äußere, transparente oder transluzente, dabei jedoch nicht zwingend und nur optional vorgesehene, Deckschicht 18, welche eine bei bestimmungsgemäßer Anordnung der Funktionsanzeige 1 eine dem Betrachter B zugewandte Oberfläche definiert. Beispielsweise handelt es sich um eine Schicht aus einem Kunststoff, bevorzugt Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder aus einem Glaswerkstoff. Die Deckschicht 18 kann auch Teil eines Schichtaufbaus aus mehreren Schichten sein. Angrenzend an die Deckschicht 18 auf der dem Betrachter B abgewandten Oberfläche der Deckschicht 18 ist eine ein Elektrodenarray ausbildende, transparente, leitfähige Beschichtung aufgebracht, die der ortsaufgelösten Berührdetektion dient und mit einer nicht dargestellten Auswerteinheit mittels mehrerer Flexleiter elektrisch leitend verbunden ist.

Die Funktionsanzeige 1 umfasst ferner einen Lichtleiterstapel aus mindestens zwei, überlagert angeordneten, transparenten oder transluzenten, flächigen, Lichtleitern2, 3. Auch diese sind beispielsweise aus einem Kunststoff, bevorzugt Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder aus einem Glaswerkstoff ausgebildet. Bevorzugt handelt es sich jeweils um eine thermoplastische Kunststoffschicht oder eine thermoplastische Kunststofffolie. Die Lichtleiter 2, 3 sind durch einen zwischen den Lichtleitern 2, 3 vorgesehene Schicht 14, hier einem Luftspalt, aus einem Material, hier Luft, mit einem Brechungsindex, der niedriger ist als das der benachbarten Lichtleiter 2, 3, separiert. Eine hier nicht näher bezeichnete Schicht aus Luft ist ebenfalls zwischen der Deckschicht 18 und dem nächstbenachbarten, obersten Lichtleiter 2 vorgesehen. Die Lichtleiter 2, 3 bilden jeweils mindestens eine dem Betrachter B zugewandte Hauptfläche H und eine dem Betrachter abgewandte Hauptfläche H' aus, während der obere, dem Betrachter B nähere Lichtleiter 2 eine dem Betrachter abgewandte Hauptfläche H' aufweist, die dem entgegen der Stapelrichtung S nächstbenachbarten Lichtleiter 14 zugewandt ist.

Den Lichtleitern 2, 3 ist jeweils mindestens eine Lichtquelle 5 bzw. 5', nämlich jeweils eine Leuchtdiode in SMD-Bauweise, zugeordnet, die so angeordnet sind, dass das von ihnen erzeugte Licht über eine bezüglich der Stapelrichtung S seitliche Stirnfläche 11 in den zugeordneten Lichtleiter 2, 3 eingekoppelt wird. Unter anderem um dabei jeweils unerwünschte Lichtstreuung oder Lichtabstrahlung in die benachbarten Lichtleiter 2, 3 zu vermeiden, ist eine Blende 6 aus einem opaken Material, insbesondere einem opaken Thermoplast, vorgesehen. Die Blende 6 bildet vorstehende Rippen 13 aus, zwischen den Nuten zur Aufnahme der Lichtleiter 2, 3, genauer deren Enden mit den zur Lichteinkopplung vorgesehenen Stirnflächen 11 formschlüssig aufgenommen und festgelegt sind.

An der gegenüberliegenden Stirnfläche ist ein rahmenförmiges Gehäuse 17 vorgesehen. Eine nicht gezeigte reflexionsmindernde Beschichtung kann auf den den Lichtquellen 5, 5' abgewandten Stirnflächen der Lichtleiter 2, 3 aufgebracht sein, um Rückreflexionen in den jeweiligen Lichtleiter 2, 3 zu minimieren. In wenigstens einer der Hauptflächen des Lichtleiters 2, hier in der dem Betrachter B zugewandten Hauptfläche H, sind mehrere, singuläre Mikrostrukturen 4 durch Prägen oder Ausformen eingebracht, die dafür sorgen, dass das in den Lichtleiter 2 eingekoppelte Licht L' in Richtung des Betrachters B aus dem jeweiligen Lichtleiter 2 durch Lichtbrechung und/oder Lichtstreuung ausgekoppelt wird und einen die Mikrostrukturen 4 umfassenden, mikrostrukturierten Symbolbereich 12a definieren. Dieser ergibt alleine oder in optischem Zusammenwirken mit anderen Symbolbereichen die Form eines Symbols wieder, welches bei entsprechender Aktivierung der zugehörigen Lichtquelle 5' für den Betrachter B leuchtend sichtbar wird.

Die Mikrostrukturen 4 sind untereinander gleichförmig ausgebildet und weisen einen Maximaldurchmesser auf, der im Bereich von 1 bis 25 µm liegt. Der vom Betrachter B abgelegene Lichtleiter 3 weist in seiner dem Betrachter B zugewandten Hauptfläche H ebenfalls Mikrostrukturen 4 auf, die ebenfalls singulär und untereinander gleichförmig ausgebildet sind. Auch diese sind durch Prägen oder Ausformen in die zugehörige, hier dem Betrachter B zugewandte Hauptfläche H des Lichtleiters 3 eingebracht. Diese koppeln das in den Lichtleiter 3 eingekoppelte Licht L ebenfalls in Richtung des Betrachters 8, um hier den Symbolbereich 12b für den Betrachter zu visualisieren.

Durch selektives Aktivieren der Lichtquellen 5, 5' können vergleichsweise einfach unterschiedliche Schaltzustände oder Schaltfunktionen visualisiert werden. Die Funktionsanzeige 1 ist einfach und kostengünstig zu realisieren und gibt dem Gestalter ein großes Maß an Gestaltungsspielraum, was auch die Platzierung der Funktionsanzeige 1 betrifft. Die Funktionsanzeige zeigt so gut wie keine durch die Lichtabstrahlung bewirkte Alterungserscheinung und ist vergleichsweise energiesparend. Der mikrostrukturierte Symbolbereich 12, 12b gibt beispielsweise in Alleinwirkung oder in Zusammenwirkung mit anderen das Symbol positiv als Bild, als dessen inverse Darstellung oder als dessen Umriss wieder. Eine gewisse Tiefenwirkung ergibt sich u.a. durch den Abstand zwischen den Lichtleitern 2, 3, beispielsweise die Luftspaltdicke, eingestellt werden. Beispielsweise liegt der Abstand im Bereich 1 bis 3 mm.

Alle Lichtleiter 2, 3 sind außerhalb des mikrostrukturierten Symbolbereichs 12a, 12b transparent. Somit verbleibt ein großer Teil der Anzeigefläche 8 optisch durchlässig, so dass beispielsweise die Durchsicht durch die Funktionsanzeige 1 hindurch gewährleistet ist, um dem Betrachter B die Möglichkeit zu geben, durch die Funktionsanzeige 1 hindurch andere Anzeigen oder den Straßenverlauf zu verfolgen. Dadurch ist beispielsweise die Platzierung der Funktionsanzeige 1 an einem Lenkrad, beispielsweise im Bereich zwischen Lenkradnabe und Lenkradkranz möglich, ohne die Sicht auf das Armaturenbrett zu beeinträchtigen. Bei senkrechter Betrachtung der Anzeigefläche 8 überlappen die mikrostrukturierten Symbolbereich 12a, 12b der einzelnen Lichtleiter 2, 3 nicht, um die Darstellungsqualität der Symbole nicht zu beeinträchtigen.

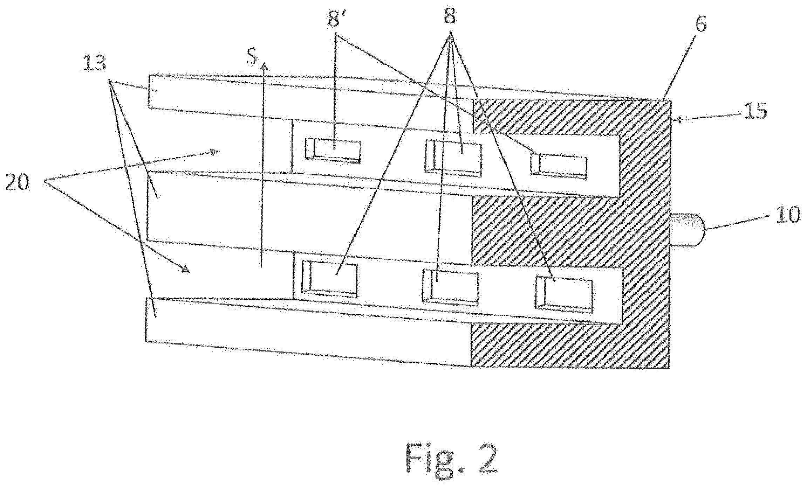

Es ist eine Leiterplatte 7 vorgesehen, auf der die mehreren Lichtquellen 5, 5' angeordnet und festgelegt sind. Hier erfolgt diese Festlegung durch Verlöten mit einer metallischen Kontaktfläche der Leiterplatte 7. Die zuvor beschriebene Blende 6 bildet auf ihrer den Lichtleitern 2, 3 abgewandten Seite eine Montagefläche 15 aus, die der Anlage der mit den Lichtquellen 5, 5' versehenen Oberfläche der Leiterplatte 7 dient. Diese Oberfläche ist parallel zur Stapelrichtung S orientiert. Die Leiterplatte 7 weist einen Durchbruch 9 auf, der von einem Zapfen 10, welcher von der Blende 6 ausgebildet wird, durchgriffen wird und dessen freies Ende durch Heißverstemmen so verformt ist, dass die Leiterplatte 7 hintergriffen und festgelegt ist. Die Blende 6 weist mehrere beidseitig offene, jeweils mindestens eine der Lichtquellen 5, 5' der Leiterplatte 7 aufnehmende Lichtschächte 8, 8' auf, so dass jeweils mindestens eine Lichtquelle 5, 5' einer Stirnfläche 11 gegenüberliegt, um Licht in die jeweilig zugehörige Stirnfläche 11 einzukoppeln und um möglichst so den ausschließlichen Lichtübertritt von der Lichtquelle 5, 5' zu dem zugehörigen Lichtleiter 2, 3 sicher zu stellen, der aufgrund der gegenüberliegenden Anordnung seiner Stirnfläche 11 der betreffenden Lichtquelle 5, 5' zugeordnet ist. Folglich sind die Lichtschächte 8, 8' so ausgebildet, dass ein unerwünschter Lichtübertritt zum Betrachter B, zu weiteren Schichten oder Lichtleitern 2, 3 neben dem zugeordneten Lichtleiter 2, 3 unterbunden wird. In Figur 2 ist die Blende 6 im Detail mit Sicht in die zwischen den Rippen 13 ausgebildeten Nute 20, die zur formschlüssigen Aufnahme und Festlegung der Lichtleiter 2, 3 vorgesehen sind, gezeigt. Hier zeigt sich, dass die Lichtschächte 8 und 8' sich in ihrer Abmessung in Stapelrichtung S unterscheiden.

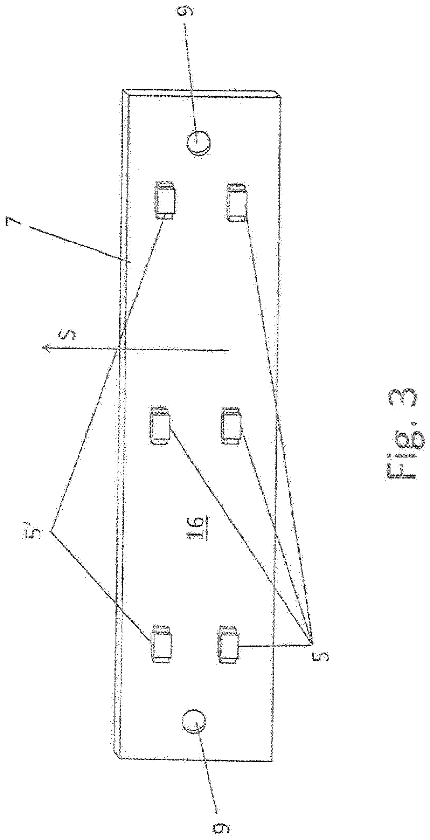

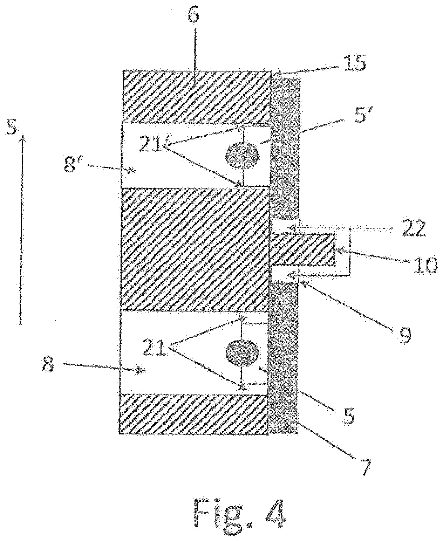

Figur 4 zeigt die Leiterplatte 7 als Aufsicht auf die mit den Lichtquellen 5, 5' bestückte Oberfläche 16. Die Lichtquellen 5, 5' sind jeweils gleichförmig ausgebildete SMD-Leuchtdioden, die mit Kontaktflächen der Leiterplatte 7 verlötet sind. Zwei quer zur Stapelrichtung S beabstandete Lichtquellen 5' qualifizieren sich aufgrund einer besonderen Abmessung der ihr zugeordneten Lichtschächte als sogenannte Ausrichtlichtquellen, wie nachfolgend erläutert wird:
Bei übereinstimmender Abmessung aller Lichtquellen 5, 5' in der Stapelrichtung S führt dies zu den in Figur 3 gezeigten Szenario. Das in Stapelrichtung S vorliegende erste Spiel 21' zweier quer zur Stapelrichtung S beabstandet angeordneter Lichtschächte 8' zur zugehörigen, im betreffenden Lichtschacht 8' aufgenommenen Lichtquelle 5' ist kleiner, als das in Stapelrichtung S vorliegende zweite Spiel 21 der verbleibenden Lichtschächte 8 zur zugehörigen im betreffenden Lichtschacht 8 aufgenommenen Lichtquelle. Als erstes bzw. zweites Spiel 21, 21' wird der lichte Gesamtabstand zwischen der jeweiligen Lichtquelle 5, 5' und dem Lichtschacht 8, 8' in Stapelrichtung S verstanden, auf den die Beweglichkeit der betreffenden Lichtquelle 5, 5' in dem ihm zugehörigen Lichtschacht 8, 8' in der Stapelrichtung S beschränkt ist. Somit dienen zwei, quer zur Stapelrichtung S beabstandet angeordnete Lichtquellen 5' und annähernd formschlüssig aufgenommene Lichtquellen 5' im Zusammenwirken mit dem ihm jeweils zugeordneten Lichtschacht 8' der mechanischen Ausrichtung zwischen der Blende 6 und der Leiterplatte 7, während die Leiterplatte 7 in Anlage mit der Montagefläche 15 der Blende 6 gebracht wird. Die verbleibenden Lichtquellen 5 bzw. Lichtschächte 8 sind aufgrund des größeren zweiten Spiels 21 davon unbeeinträchtigt. Bei den vorbekannten Lösungen wurde aufgrund der Gefahr einer Beschädigung der Lichtquellen 5, 5' oder deren elektrische Kontaktierung, wie Verlust des Lötkontakts oder Ablösen der Kontaktfläche der Leiterplatte 7 durch Scherkräfte, insbesondere bei Auslegung der Lichtquelle 5, 5' als Leuchtdioden in SMD-Bauweise, auf eine solche mechanische Einwirkung generell verzichtet, mit dem Nachteil, dass eine Fehljustierung der Lichtquellen 5, 5' in Kauf genommen werden musste. Die Gefahr der Beschädigung allenfalls zweier Lichtquellen 5' in Kauf nehmend, nutzt die vorliegende Ausführungsform diese als mechanische Positionierhilfe für die Verbindung zwischen Leiterplatte 7 und Blende 6, mit dem Vorteil, dass nunmehr eine ausreichende präzise Ausrichtung aller Lichtquellen 5, 5' zu den zugehörigen Stirnflächen 11 und damit eine optimale Ausleuchtung des zugehörigen Lichtleiters 2, 3 gewährleistet ist.

Um beispielsweise die mechanische Verbindung zur Leiterplatte 7 der zwei zur mechanischen Ausrichtung vorgesehenen Lichtquellen 5', zuvor als Ausrichtlichtquellen bezeichnet, zu stärken, können beispielsweise diverse Maßnahmen ergriffen werden, beispielsweise eine vergrößerte Kontaktfläche auf der Leiterplatte 7, ein mechanisch höher beanspruchbares Lötmittel, eine andere Ausrichtung der Ausrichtlichtquelle, beispielsweise im Vergleich zu den verbleibenden Lichtquellen 5 der Leiterplatte 7. In der gezeigten Ausgestaltung ist den zur Ausrichtlichtquelle gehörigen Lichtleiter 2 eine weitere Lichtquelle 5 als redundante Lichtquelle zugeordnet sein, die nicht als Ausrichtlichtquelle fungiert, die also ein größeres zweites Spiel 21 bei der Anordnung im zugehörigen Lichtschacht 8 aufweist.

Wie Figur 4 ferner zeigt, durchgreift der zur Festlegung der Leiterplatte 7 an der Blende 6 vorgesehene Zapfen 10 zumindest vor dem Heißverstemmen den in der Leiterplatte 7 vorgesehenen Durchbruch 9 mit einem dritten, in Stapelrichtung S zu bestimmenden Spiel 22, das mindestens größer als das erste Spiel 21' ist, um das Ausrichten der Leiterplatte 7 während des Aufsetzen auf die Montagefläche 15 und das Einführen der Lichtquellen 5, 5' in die zugehörigen Lichtschächte vor dem Heißverstemmen durch ein zumindest eingeschränkt ermöglichtes Verschieben oder Verdrehen der Leiterplatte 7 relativ zur Blende 6 bzw. zur Montagefläche 15 nicht zu behindern.

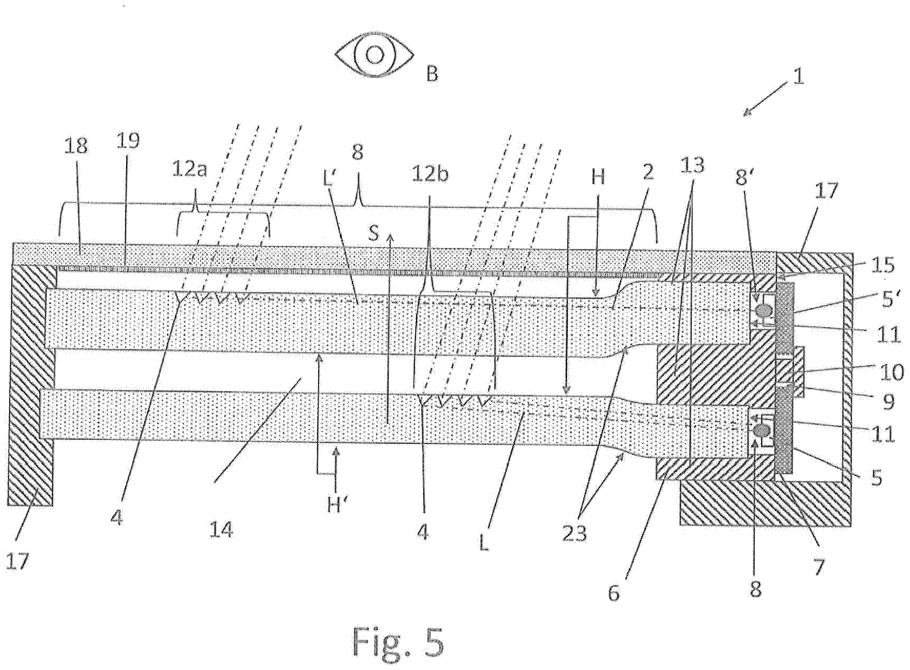

Figur 5 zeigt eine zweite Ausführungsform der erfindungsgemäßen Funktionsanzeige 1. Diese unterscheidet sich von der ersten Ausführungsform im Wesentlichen durch die Formgebung der Lichtleiter 2, 3. Um die Gefahr des wechselseitigen Lichtübersprechens in den benachbarten Lichtleiter 2, 3 zu vermeiden, weisen wenigstens die äußeren Lichtleiter 2, 3 des Lichtleiterstapels jeweils eine Kröpfung 23 an demjenigen Ende auf, welches die der Lichtquelle 5, 5' zugewandte Stirnfläche 11 ausbildet. Hier ist die Kröpfung 23 ausgebildet, den Abstand zwischen den Lichtleitern 2, 3 in Richtung der Blende 6 gegenüber dem Bereich der Lichtleiter 2, 3, in dem der mikrostrukturierte Symbolbereich 12a, 12b angeordnet ist zu vergrößern, um die Fixierung der Lichtleiter 2, 3 zu verbessern und die wechselseitige optische Isolierung durch die Blende 6 zu verbessern. Im Unterschied zur ersten Ausführungsform ist ferner das Gehäuse 17 rahmenförmig ausgebildet, wobei eine unmittelbare Berührung zwischen dem Gehäuse 17 und der Leiterplatte 7 ausgeschlossen ist.

## Patentansprüche

1. Funktionsanzeige (1) zur selektiven Anzeige von mehreren, jeweils eine Schaltfunktion und/oder jeweils mindestens zwei Schaltzustände repräsentierenden Symbolen, insbesondere für ein Kraftfahrzeug, aufweisend:
einen Lichtleiterstapel, der bei bestimmungsgemäßer Anbringung der Funktionsanzeige (1) eine einem Betrachter (B) zugewandte Anzeigefläche (8) ausbildet; wobei der Lichtleiterstapel aus mindestens zwei, in einer Stapelrichtung (S) überlagert angeordneten, transparenten oder transluzenten, flächigen Lichtleitern (2, 3) ausgebildet ist, die durch eine transparente oder transluzente Schicht aus einem im Vergleich zu den angrenzenden Lichtleitern (2, 3) optisch dünneren Material, bevorzugt über einen Luftspalt (14), beabstandet angeordnet sind, so dass die Lichtleiter (2, 3) jeweils eine einem Betrachter (B) zugewandte Hauptfläche (H) und eine dem Betrachter (B) abgewandte Hauptfläche (H') aufweisen und bei mindestens einem Lichtleiter (2) die dem Betrachter (B) abgewandte Hauptfläche (H') einem entgegen der Stapelrichtung (S) nächstbenachbarten Lichtleiter (3) zugewandt ist;
pro Lichtleiter (2, 3) mindestens eine Lichtquelle (5, 5'), die so angeordnet ist, dass jeweils ihr Licht (L, L') über eine der Lichtquelle (5, 5') zugewandte Stirnfläche (11) eines zugehörigen Lichtleiters (2, 3) in den jeweiligen Lichtleiter (2, 3) eingekoppelt wird;
wobei ferner pro Lichtleiter (2, 3) wenigstens ein im oder auf dem Lichtleiter (2, 3) vorgesehener, mikrostrukturierter Symbolbereich (12a, 12b) vorgesehen ist, der mehrere, lichtbrechende und/oder lichtstreuende Mikrostrukturen (4) umfasst und ausgebildet ist, bei jeweils aktivierter Lichtquelle (5, 5') für den Betrachter (B) mittels des in den Lichtleiter (2, 3) eingekoppelten Lichtes (L, L') leuchtend sichtbar zu sein, um dem Betrachter (B) ein sich aus einem oder mehreren mikrostruktureierten Symbolbereichen (12a, 12b) zusammensetzendes Symbol anzuzeigen;
eine Leiterplatte (7), auf der die mehreren Lichtquellen (5, 5') angeordnet und festgelegt sind;
eine stoffschlüssig und/oder kraftschlüssig und/oder formschlüssig an dem Lichtleiterstapel festgelegte Blende (6), an der die Leiterplatte (7) unter Anlage an einer Montagefläche (15) festgelegt ist, wobei die Blende (6) mehrere beidseitig offene, jeweils mindestens eine der Lichtquellen (5, 5') der Leiterplatte (7) aufnehmende Lichtschächte (8, 8') aufweist, so dass mindestens eine Lichtquelle (5, 5') einer zugehörigen Stirnfläche (11) gegenüberliegt, um Licht (L, L') in die zugehörige Stirnfläche (11) einzukoppeln, **dadurch gekennzeichnet, dass** das in Stapelrichtung (S) vorliegende erste Spiel (21') zweier quer zur Stapelrichtung (S) beabstandet angeordneter Lichtschächte (8') zur zugehörigen, im betreffenden Lichtschacht (8') aufgenommenen Lichtquelle (5') kleiner ist, als jedes in Stapelrichtung (S) vorliegende zweite Spiel (21) der verbleibenden Lichtschächte (8) zur zugehörigen im betreffenden Lichtschacht (8) aufgenommenen Lichtquelle (5).

2. Funktionsanzeige (1) gemäß Anspruch 1, wobei die Lichtquellen (5, 5') in SMD-Bauweise ausgeführte Leuchtdioden sind.

3. Funktionsanzeige (1) gemäß einem der vorhergehenden Ansprüche, wobei der mikrostrukturierte Symbolbereich (12a, 12b) jeweils mehrere, untereinander gleichförmig ausgebildete, bevorzugt singuläre, Mikrostrukturen (4) umfasst.

4. Funktionsanzeige (1) gemäß einem der vorhergehenden Ansprüche, wobei die Blende (6) eine der Anzahl der Lichtleiter (2, 3) entsprechende Anzahl von Nuten (20) zur formschlüssigen Aufnahme jeweils desjenigen Endes des Lichtleiters (2, 3) aufweist, welches die der Lichtquelle (5, 5') zugewandte Stirnfläche (11) ausbildet.

5. Funktionsanzeige (1) gemäß einem der vorhergehenden Ansprüche, wobei zur Festlegung der Leiterplatte (7) an der Blende (6), die Blende (6) einen eine Ausnehmung oder einen Durchbruch (9) der Leiterplatte (7) durchgreifenden Zapfen (10) ausbildet, dessen freies Ende heißverstemmt ist.

6. Funktionsanzeige (1) gemäß einem der vorhergehenden Ansprüche, wobei wenigstens die äußeren Lichtleiter (2, 3) des Lichtleiterstapels jeweils eine Kröpfung (23) an dem Ende aufweisen, welches die der Lichtquelle (5, 5') zugewandte Stirnfläche (11) ausbildet.

7. Funktionsanzeige (1) gemäß einem der vorhergehenden Ansprüche, ferner aufweisend eine Deckschicht (18) aus einem transparenten Material, welche zwischen dem Lichtleiterstapel und dem Betrachter (B) angeordnet ist.

8. Funktionsanzeige (1) gemäß einem der vorhergehenden Ansprüche, ferner aufweisend ein zwischen dem Betrachter (B) und dem Lichtleiterstapel angeordnetes, transparentes Elektrodenarray (19) sowie eine zugehörige Auswertelektronik zur kapazitiven, bevorzugt ortsaufgelöst kapazitiven, Berührdetektion.

9. Funktionsanzeige (1) gemäß einem der vorhergehenden Ansprüche, wobei die Leiterplatte (7) eine die Lichtquellen (5, 5') tragende Leiterplattenoberfläche (16) aufweist und die Stapelrichtung (S) parallel zur Leiterplattenoberfläche (16) ist.

10. Funktionsanzeige (1) gemäß einem der vorhergehenden Ansprüche, ferner aufweisend ein Gehäuse (17), wobei die Leiterplatte (7) nicht unmittelbar oder ausschließlich elastisch gegenüber dem Gehäuse (17) abgestützt ist.

11. Montageverfahren für eine Funktionsanzeige (1) zur selektiven Anzeige von Schaltfunktionen und/oder Schaltzuständen repräsentierenden Symbolen, insbesondere für ein Kraftfahrzeug, aufweisend die folgenden Schritte:
Bereitstellen eines Lichtleiterstapels, der bei bestimmungsgemäßer Anbringung der Funktionsanzeige (1) eine einem Betrachter (B) zugewandte Anzeigefläche (8) ausbildet; wobei der Lichtleiterstapel aus mindestens zwei, in einer Stapelrichtung (S) überlagert angeordneten, transparenten oder transluzenten, flächigen Lichtleitern (2, 3) ausgebildet ist, die durch eine transparente oder transluzente Schicht aus einem im Vergleich zu den angrenzenden Lichtleitern (2,3) optisch dünneren Material, bevorzugt über einen Luftspalt (14), beabstandet angeordnet sind, so dass die Lichtleiter (2, 3) jeweils eine einem Betrachter (B) zugewandte Hauptfläche (H) und eine dem Betrachter (B) abgewandte Hauptfläche (H') aufweisen und bei mindestens einem Lichtleiter (2) die dem Betrachter (B) abgewandte Hauptfläche (H') einem entgegen der Stapelrichtung (S) nächstbenachbarten Lichtleiter (3) zugewandt ist und wobei ferner pro Lichtleiter (2, 3) wenigstens ein im oder auf dem Lichtleiter (2, 3) vorgesehener, mikrostrukturierter Symbolbereich (12a, 12b) vorgesehen ist, der mehrere, lichtbrechende und/oder lichtstreuende Mikrostrukturen (4) umfasst;
Bereitstellen einer Leiterplatte (7) mit mehreren, mindestens der Anzahl der Lichtleitern (2, 3) entsprechenden Anzahl von Lichtquellen (5, 5'), die auf der Leiterplatte (7) angeordnet sind;
Bereitstellen einer Blende (6), welche eine Montagefläche (15) zur Anlage der Leiterplatte (7) und mehrere beidseitig offene Lichtschächte (8, 8') aufweist, wobei die Lichtschächte (8, 8') zur Aufnahme jeweils mindestens einer der Lichtquellen (5, 5') der Leiterplatte (7) ausgebildet sind;
Festlegen des Lichtleiterstapels an der Blende (6) durch stoffschlüssiges und/oder kraftschlüssiges und/oder formschlüssiges Verbinden;
Ausrichten der Leiterplatte (7) unter Anlage an der Montagefläche (15), so dass jeweils mindestens eine Lichtquelle (5, 5') einer Stirnfläche (11) eines der Lichtleiter (2, 3) zur Lichteinkopplung durch einen der Lichtschächte (8, 8') gegenüberliegt und die Lichtquellen (5, 5') jeweils in einem der Lichtschächte (8, 8') aufgenommen sind; und wobei das in Stapelrichtung (S) vorliegende erste Spiel (21') zweier quer zur Stapelrichtung (S) beabstandet angeordneter Lichtschächte (8') zur zugehörigen, im betreffenden Lichtschacht (8') aufgenommenen Lichtquelle (5') kleiner ist, als jedes in Stapelrichtung (S) vorliegende zweite Spiel (21) der verbleibenden Lichtschächte (8) zur zugehörigen im betreffenden Lichtschacht (8) aufgenommenen Lichtquelle (5);
Festlegen der Leiterplatte an der Blende (6) derart, dass jeweils das Licht der Lichtquellen (5, 5') über eine der Lichtquelle zugewandte Stirnfläche (11) eines zugehörigen Lichtleiters (13, 14, 15) in den jeweiligen Lichtleiter (2, 3) eingekoppelt wird und der mikrostrukturierte Symbolbereich (12a, 12b) bei jeweils aktivierter Lichtquelle (5, 5') für den Betrachter (B) mittels des in den Lichtleiter (2, 3) eingekoppelten Lichtes leuchtend sichtbar wird, um dem Betrachter (B) ein sich aus einem oder mehreren mikrostruktureierten Symbolbereichen (12a, 12b) zusammensetzendes Symbol anzuzeigen.

12. Montageverfahren gemäß dem vorhergehenden Anspruch, wobei zur Festlegung der Leiterplatte (7) an der Blende (6), die Blende (6) einen eine Ausnehmung oder einen Durchbruch (9) der Leiterplatte (7) durchgreifenden Zapfen (10) ausbildet, der mit einem in Stapelrichtung (S) vorliegenden dritten Spiel (22) die Ausnehmung oder den Durchbruch (9) durchgreift, welches mindestens größer als das erste Spiel (21') ist; und das Festlegen ein abschließendes Heißverstemmen des Zapfens (10), um die Leiterplatte (7) an der Blende (6) festzulegen, umfasst.

13. Montageverfahren gemäß einem der beiden vorhergehenden Ansprüche, wobei die Lichtquellen (5, 5') in SMD-Bauweise ausgeführte Leuchtdioden sind und in einem dem Bereitstellen der Leiterplatte (7) vorherhegenden Lötschritt mit der Leiterplatte (7) verlötet werden.

## Claims

1. Functional display (1) for selectively displaying a plurality of symbols representing in each case a switching function and/or in each case at least two switching states, in particular for a motor vehicle, having:
a light guide stack which, when the functional display (1) has been installed as intended, forms a display surface (8) facing a viewer (B); wherein the light guide stack is formed from at least two transparent or translucent, planar light guides (2, 3), which are arranged one above the other in a stack direction (S) and are arranged spaced apart by a transparent or translucent layer made of an optically thinner material than the adjoining light guides (2, 3), preferably via an air gap (14), in such a way that the light guides (2, 3) have in each case a main surface (H) facing a viewer (B) and a main surface (H') facing away from the viewer (B), and, in the case of at least one light guide (2), the main surface (H') facing away from the viewer (B) faces a light guide (3) that is the closest neighbour counter to the stack direction (S);
at least one light source (5, 5') per light guide (2, 3), with the light source being arranged such that its light (L, L') is coupled into the respective light guide (2, 3) via an end face (11) of an associated light guide (2, 3) facing the light source (5, 5');
wherein furthermore at least one microstructured symbol region (12a, 12b) per light guide (2, 3) is provided, which is provided in or on the light guide (2, 3) and comprises a plurality of diffractive and/or light-scattering microstructures (4) and is designed to be luminously visible to the viewer (B) by means of the light (L, L') coupled into the light guide (2, 3) in the case of a respectively activated light source (5, 5') in order to display to the viewer (B) a symbol that is composed of one or more microstructured symbol regions (12a, 12b);
a printed circuit board (7), on which the plurality of light sources (5, 5') are arranged and fixed;
a screen (6) that is fixed cohesively and/or force-fittingly and/or form-fittingly to the light guide stack and to which the printed circuit board (7) is fixed by it resting against a mounting surface (15), wherein the screen (6) has a plurality of light shafts (8, 8') which are open on both sides and in each case hold at least one of the light sources (5, 5') of the printed circuit board (7), with the result that at least one light source (5, 5') lies opposite an associated end face (11) in order to couple light (L, L') into the associated end face (11),
**characterized in that**
the first clearance (21'), present in the stack direction (S), of two light shafts (8') arranged spaced apart transversely to the stack direction (S) with respect to the associated light source (5') held in the relevant light shaft (8') is smaller than each second clearance (21), present in the stack direction (S), of the remaining light shafts (8) with respect to the associated light source (5) held in the relevant light shaft (8).

2. Functional display (1) according to Claim 1, wherein the light sources (5, 5') are light-emitting diodes with an SMD construction.

3. Functional display (1) according to either of the preceding claims, wherein the microstructured symbol region (12a, 12b) comprises in each case a plurality of, preferably singular, microstructures (4) which have the same shape among one another.

4. Functional display (1) according to any of the preceding claims, wherein the screen (6) has a number of grooves (20) which corresponds to the number of light guides (2, 3), for form-fittingly holding in each case that end of the light guide (2, 3) which forms the end face (11) facing the light source (5, 5').

5. Functional display (1) according to any of the preceding claims, wherein, for fixing the printed circuit board (7) to the screen (6), the screen (6) forms a pin (10) which extends through a cutout or a hole (9) in the printed circuit board (7) and whose free end is heat-staked.

6. Functional display (1) according to any of the preceding claims, wherein at least the outer light guides (2, 3) of the light guide stack have in each case an offset (23) at the end which forms the end face (11) facing the light source (5, 5').

7. Functional display (1) according to any of the preceding claims, further having a capping layer (18) made of a transparent material, the capping layer being arranged between the light guide stack and the viewer (B).

8. Functional display (1) according to any of the preceding claims, further having a transparent electrode array (19), arranged between the viewer (B) and the light guide stack, and an associated evaluation electronic system for capacitive, preferably spatially resolved capacitive, touch detection.

9. Functional display (1) according to any of the preceding claims, wherein the printed circuit board (7) has a printed circuit board surface (16) carrying the light sources (5, 5') and the stack direction (S) is parallel to the printed circuit board surface (16).

10. Functional display (1) according to any of the preceding claims, further having a housing (17), wherein the printed circuit board (7) is not directly supported or supported only elastically with respect to the housing (17).

11. Installation method for a functional display (1) for selectively displaying symbols representing switching functions and/or switching states, in particular for a motor vehicle, including the following steps:
providing a light guide stack which, when the functional display (1) has been installed as intended, forms a display surface (8) facing a viewer (B); wherein the light guide stack is formed from at least two transparent or translucent, planar light guides (2, 3), which are arranged one above the other in a stack direction (S) and are arranged spaced apart by a transparent or translucent layer made of an optically thinner material than the adjoining light guides (2, 3), preferably via an air gap (14), in such a way that the light guides (2, 3) have in each case a main surface (H) facing a viewer (B) and a main surface (H') facing away from the viewer (B), and, in the case of at least one light guide (2), the main surface (H') facing away from the viewer (B) faces a light guide (3) that is the closest neighbour counter to the stack direction (S), and wherein furthermore at least one microstructured symbol region (12a, 12b) per light guide (2, 3) is provided, which is provided in or on the light guide (2, 3) and comprises a plurality of diffractive and/or light-scattering microstructures (4);
providing a printed circuit board (7) having a plurality of light sources (5, 5') which are arranged on the printed circuit board (7) and whose number corresponds at least to the number of light guides (2, 3);
providing a screen (6) that has a mounting surface (15) for the printed circuit board (7) to rest against it and a plurality of light shafts (8, 8') which are open on both sides, wherein the light shafts (8, 8') are designed for holding in each case at least one of the light sources (5, 5') of the printed circuit board (7);
fixing the light guide stack to the screen (6) by way of a cohesive and/or force-fitting and/or form-fitting connection;
orienting the printed circuit board (7) as it rests against the mounting surface (15) so that in each case at least one light source (5, 5') lies opposite an end face (11) of one of the light guides (2, 3) for coupling in light through one of the light shafts (8, 8') and the light sources (5, 5') are each held in one of the light shafts (8, 8'); and wherein the first clearance (21'), present in the stack direction (S), of two light shafts (8') arranged spaced apart transversely to the stack direction (S) with respect to the associated light source (5') held in the relevant light shaft (8') is smaller than each second clearance (21), present in the stack direction (S), of the remaining light shafts (8) with respect to the associated light source (5) held in the relevant light shaft (8);
fixing the printed circuit board to the screen (6) such that in each case the light from the light sources (5, 5') is coupled into the respective light guide (2, 3) via an end face (11) of an associated light guide (13, 14, 15) facing the light source, and the microstructured symbol region (12a, 12b) becomes luminously visible to the viewer (B) by means of the light coupled into the light guide (2, 3) in the case of a respectively activated light source (5, 5') in order to display to the viewer (B) a symbol that is composed of one or more microstructured symbol regions (12a, 12b).

12. Installation method according to the preceding claim, wherein, for fixing the printed circuit board (7) to the screen (6), the screen (6) forms a pin (10) which extends through a cutout or a hole (9) in the printed circuit board (7) and which extends through the cutout or the hole (9) with a third clearance (22) present in the stack direction (S), with the third clearance being at least larger than the first clearance (21'); and the fixing comprises a terminating heat staking of the pin (10) in order to fix the printed circuit board (7) to the screen (6).

13. Installation method according to either of the two preceding claims, wherein the light sources (5, 5') are light-emitting diodes with an SMD construction and are soldered to the printed circuit board (7) in a soldering step that precedes the provision of the printed circuit board (7).

## Revendications

1. Affichage fonctionnel (1) destiné à l'affichage sélectif de plusieurs symboles représentant respectivement une fonction de commutation et/ou respectivement au moins deux états de commutation, en particulier pour un véhicule automobile, présentant :
un empilement de guides de lumière qui, en cas de mise en place correcte de l'affichage fonctionnel (1), réalise une surface d'affichage (8) tournée vers un observateur (B) ; dans lequel l'empilement de guides de lumière est réalisé par au moins deux guides de lumière plans (2, 3), transparents ou translucides, disposés en superposition dans une direction d'empilement (S), qui sont disposés de manière espacée par une couche transparente ou translucide d'un matériau optiquement plus fin en comparaison avec les guides de lumière (2, 3) adjacents, de préférence par un entrefer (14), de sorte que les guides d'ondes (2, 3) présentent respectivement une surface principale (H) tournée vers un observateur (B) et une surface principale (H') détournée de l'observateur (B), et sur au moins un guide de lumière (2), la surface principale (H') détournée de l'observateur (B) est tournée vers un guide de lumière (3) le plus proche dans la direction inverse de l'empilement (S) ;
pour chaque guide de lumière (2, 3), au moins une source de lumière (5, 5') qui est disposée de telle sorte que sa lumière (L, L') est injectée dans le guide de lumière (2, 3) respectif par l'intermédiaire d'une surface frontale (11) d'un guide de lumière (2, 3) associé, tournée vers la source de lumière (5, 5') ;
dans lequel, en outre pour chaque guide de lumière (2, 3), au moins une zone de symbole microstructurée (12a, 12b), prévue dans ou sur le guide de lumière (2, 3), est prévue qui comprend plusieurs microstructures (4) réfringentes et/ou diffusant la lumière, et est réalisée, lorsque la source de lumière (5, 5') est activée respectivement, pour être visible de façon lumineuse pour l'observateur (B) au moyen de la lumière (L, L') injectée dans le guide de lumière (2, 3) afin d'afficher pour l'observateur (B) un symbole composé d'une ou de plusieurs zones de symbole microstructurées (12a, 12b) ;
une carte de circuits imprimés (7) sur laquelle les plusieurs sources de lumière (5, 5') sont disposées et fixées ;
un diaphragme (6) fixé à l'empilement de guides de lumière par liaison de matière et/ou par adhérence et/ou par complémentarité de forme, auquel la carte de circuits imprimés (7) est fixée en étant appliquée contre une surface de montage (15), dans lequel le diaphragme (6) présente plusieurs puits de lumière (8, 8') ouverts des deux côtés et recevant respectivement au moins l'une des sources de lumière (5, 5') de la carte de circuits imprimés (7) de sorte qu'au moins une source de lumière (5, 5') est opposée à une surface frontale associée (11) pour injecter la lumière (L, L') dans la surface frontale associée (11),
**caractérisé en ce que** le premier jeu (21') présent dans la direction d'empilement (S) de deux puits de lumière (8') disposés de manière espacée transversalement à la direction d'empilement (S) par rapport à la source de lumière associée (5') reçue dans le puits de lumière (8') concerné est inférieur à chaque deuxième jeu (21) présent dans la direction d'empilement (S) des puits de lumière (8) restants par rapport à la source de lumière associée (5), reçue dans le puits de lumière (8) concerné.

2. Affichage fonctionnel (1) selon la revendication 1, dans lequel les sources de lumière (5, 5') sont des diodes électroluminescentes réalisées en mode CMS.

3. Affichage fonctionnel (1) selon l'une quelconque des revendications précédentes, dans lequel la zone de symbole microstructurée (12a, 12b) comprend respectivement plusieurs microstructures (4) réalisées de manière uniforme entre elles, de préférence uniques.

4. Affichage fonctionnel (1) selon l'une quelconque des revendications précédentes, dans lequel le diaphragme (6) présente un nombre de rainures (20) correspondant au nombre des guides de lumière (2, 3) pour recevoir par complémentarité de forme respectivement l'extrémité du guide de lumière (2, 3) qui réalise la surface frontale (11) tournée vers la source de lumière (5, 5').

5. Affichage fonctionnel (1) selon l'une quelconque des revendications précédentes, dans lequel pour la fixation de la carte de circuits imprimés (7) au diaphragme (6), le diaphragme (6) réalise un tenon (10) traversant un évidement ou un passage (9) de la carte de circuits imprimés (7) et dont l'extrémité libre est matée à chaud.

6. Affichage fonctionnel (1) selon l'une quelconque des revendications précédentes, dans lequel au moins les guides de lumière extérieurs (2, 3) de l'empilement de guides de lumière présentent respectivement un coude (23) à l'extrémité qui réalise la surface frontale (11) tournée vers la source de lumière (5, 5').

7. Affichage fonctionnel (1) selon l'une quelconque des revendications précédentes, présentant en outre une couche de recouvrement (18) d'un matériau transparent, qui est disposée entre l'empilement de guides de lumière et l'observateur (B).

8. Affichage fonctionnel (1) selon l'une quelconque des revendications précédentes, présentant en outre une matrice d'électrodes transparente (19) disposée entre l'observateur (B) et l'empilement de guides de lumière, ainsi qu'une électronique d'évaluation associée pour la détection de contact capacitive, de préférence capacitive à résolution spatiale.

9. Affichage fonctionnel (1) selon l'une quelconque des revendications précédentes, dans lequel la carte de circuits imprimés (7) présente une surface de carte de circuits imprimés (16) portant les sources de lumière (5, 5'), et la direction d'empilement (S) est parallèle à la surface de carte de circuits imprimés (16).

10. Affichage fonctionnel (1) selon l'une quelconque des revendications précédentes, présentant en outre un boîtier (17), dans lequel la carte de circuits imprimés (7) n'est pas supportée directement ou uniquement de manière élastique par rapport au boîtier (17).

11. Procédé de montage pour un affichage fonctionnel (1) destiné à l'affichage sélectif de symboles représentant des fonctions de commutation et/ou des états de commutation, en particulier pour un véhicule automobile, présentant les étapes suivantes consistant à :
fournir un empilement de guides de lumière qui, en cas de mise en place correcte de l'affichage fonctionnel (1), réalise une surface d'affichage (8) tournée vers un observateur (B) ; dans lequel l'empilement de guides de lumière est réalisé par au moins deux guides de lumière plans (2, 3), transparents ou translucides, disposés en superposition dans une direction d'empilement (S), qui sont disposés de manière espacée par une couche transparente ou translucide d'un matériau optiquement plus fin en comparaison avec les guides de lumière (2, 3) adjacents, de préférence par un entrefer (14), de sorte que les guides d'ondes (2, 3) présentent respectivement une surface principale (H) tournée vers un observateur (B) et une surface principale (H') détournée de l'observateur (B), et sur au moins un guide de lumière (2), la surface principale (H') détournée de l'observateur (B) est tournée vers un guide de lumière (3) le plus proche dans la direction inverse de l'empilement (S), et dans lequel en outre pour chaque guide de lumière (2, 3), au moins une zone de symbole microstructurée (12a, 12b), prévue dans ou sur le guide de lumière (2, 3), est prévue qui comprend plusieurs microstructures (4) réfringentes et/ou diffusant la lumière ;
fournir une carte de circuits imprimés (7) pourvue de plusieurs sources de lumière (5, 5') d'un nombre correspondant au moins au nombre des guides de lumière (2, 3) et qui sont disposées sur la carte de circuits imprimés (7) ;
fournir un diaphragme (6) qui présente une surface de montage (15) pour l'application de la carte de circuits imprimés (7) et plusieurs puits de lumière (8, 8') ouverts des deux côtés, les puits de lumière (8, 8') étant réalisés pour recevoir respectivement au moins l'une des sources de lumière (5, 5') de la carte de circuits imprimés (7) ;
fixer l'empilement de guides de lumière au diaphragme (6) par liaison de matière et/ou par adhérence et/ou par complémentarité de forme ;
aligner la carte de circuits imprimés (7) par application contre la surface de montage (15) de sorte que respectivement au moins une source de lumière (5, 5') est opposée à une surface frontale (11) d'un des guides de lumière (2, 3) pour l'injection de lumière à travers l'un des puits de lumière (8, 8'), et les sources de lumière (5, 5') sont reçues respectivement dans l'un des puits de lumière (8, 8') ; et dans lequel le premier jeu (21') présent dans la direction d'empilement (S) de deux puits de lumière (8') disposés de manière espacée transversalement à la direction d'empilement (S) par rapport à la source de lumière associée (5') reçue dans le puits de lumière (8') concerné est inférieur à chaque deuxième jeu (21) présent dans la direction d'empilement (S) des puits de lumière (8) restants par rapport à la source de lumière associée (5) reçue dans le puits de lumière (8) concerné ;
fixer la carte de circuits imprimés au diaphragme (6) de telle sorte que respectivement la lumière des sources de lumière (5, 5') est injectée dans le guide de lumière (2, 3) respectif par l'intermédiaire d'une surface frontale (11) tournée vers la source de lumière d'un guide de lumière associé (13, 14, 15), et la zone de symbole microstructurée (12a, 12b), lorsque la source de lumière (5, 5') est respectivement activée, est visible de manière lumineuse pour l'observateur (B) au moyen de la lumière injectée dans le guide de lumière (2, 3) afin d'afficher pour l'observateur (B) un symbole composé d'une ou de plusieurs zones de symbole microstructurées (12a, 12b).

12. Procédé de montage selon la revendication précédente, dans lequel pour la fixation de la carte de circuits imprimés (7) au diaphragme (6), le diaphragme (6) réalise un tenon (10) traversant un évidement ou un passage (9) de la carte de circuits imprimés (7) qui traverse avec un troisième jeu (22) présent dans la direction d'empilement (S) l'évidement ou le passage (9) qui est au moins supérieur au premier jeu (21') ; et la fixation comprend un matage à chaud final du tenon (10) afin de fixer la carte de circuits imprimés (7) au diaphragme (6).

13. Procédé de montage selon l'une des deux revendications précédentes, dans lequel les sources de lumière (5, 5') sont des diodes électroluminescentes réalisées en mode CMS qui sont brasées sur la carte de circuits imprimés (7) dans une étape de brasage précédant la fourniture de la carte de circuits imprimés (7).
